Europäisches Patentamt

European Patent Office

Office européen des brevets

(11) Publication number: 0 386 590 A1

# EUROPEAN PATENT APPLICATION

(21) Application number: 90103794.5

(22) Date of filing: 27.02.90

(51) Int. Cl.⁵: G05B 19/18, B23Q 11/00

(30) Priority: 06.03.89 IT 1966389

(43) Date of publication of application:
12.09.90 Bulletin 90/37

(84) Designated Contracting States:
AT BE CH DE DK ES FR GB GR IT LI LU NL SE

(71) Applicant: INNSE MACCHINE UTENSILI S.R.L.
Via A. Franchi, 20
I-25127 Brescia(IT)

(72) Inventor: Cotta Rasmusino, Francesco
Via F.lli Casiraghi 53
I-20099 Sesto S. Giovanni, Milano(IT)

(74) Representative: Vannini, Torquato et al
JACOBACCI-CASETTA & PERANI S.p.A. 7 Via
Visconti di Modrone
I-20122 Milan(IT)

(54) A device for counter-balancing the weight and moment induced in operation by the moving head of a machine tool.

(57) A device (18) for counter-balancing the weight and moment induced in operation by a head (8) of a machine tool (1) being guided for movement in a horizontal direction on a slide (7) which is movable vertically along an upright comprises a pair of tensioning ropes (17,19) set mutually apart and having respective ends connected to the slide (7) and opposed ends wound around corresponding drums (24,25) which are driven controllably by electric motors. Also provided are force transducers (20,21) associated with each rope, and a signal processor (37) connected with its input to the transducers and with its output end to the electric motors (31,35) to so adjust the tension forces on the ropes as to keep the sum of the tension forces at a value equal to the weight to be balanced and their difference equal to a value compensating for the induced moment.

Fig-1

This invention relates to a device for counterbalancing the weight and moment induced in operation by the head, and any attachment thereof, of a machine tool being guided for movement along a horizontal direction on a slide which is movable vertically along an upright, the device being of a type which includes a tensioning rope having one end connected to said slide and the other end connected to an electric hoist.

The invention is particularly, though not solely, concerned with a device for counterbalancing the weight and moment induced in operation by a spindle head of a horizontal spindle milling and boring machine, and reference will be made throughout this description to that field of application for convenience of illustration.

As is known, on machine tools of the kind outlined above, the spindle head is driven slidably in a horizontal direction on a slide which is, in turn, guided for movement in a vertical direction along an upright.

The slide and spindle head advance movements along the upright and the slide, respectively, are achieved by some suitable circulating ball screw or screw-and-rack drives with hydrostatic lubrication, or some other like drive means.

Such machine tools require the provision of devices effective to counterbalance the weight of the slide and its related spindle head, because the above-mentioned drives, while being capable of overcoming forces due to frictional resistance and respective components of the working stresses involved, cannot be called upon to also withstand the weights of the structures which they are driving, for otherwise, their sizing would pose serious problems.

Currently available in the art are a variety of balancing devices effective to develop a force counteracting the combined weights of the carriage and the head borne thereby.

A solution is described, for example, in German Patent No.3422586 to this same Applicant.

That patent discloses a balancing device which comprises a tensioning rope connected with one end to the slide and having the other end wound around a drum which is driven by a DC motor arranged to apply a tension to the rope which is continuously compared with the weight of the slide and head assembly.

While being advantageous in more than one way, this prior device has shown to only perform as expected where the resultant of the balancing force lies through the center of gravity of the slide and head assembly.

When, however, the spindle head is moved on the carriage in the horizontal direction, as implied by its advance movement, the center of gravity of the slide and head assembly is shifted in position.

As a result, the spacing created between the slide/head assembly and the point of application of the balancing force will induce a moment which stresses the structure of the machine slide and upright thereby the spindle head will yield to it in the vertical plane, and simultaneously therewith, a deviation from straight-line motion is induced in the spindle head advance movement in the horizontal direction.

The technical problem that underlies this invention is to provide a balancing device which has such constructional and performance characteristics as to avoid the above-noted deviation from a straight advance path of the head in the horizontal direction.

The solutive idea according to the invention is to provide a balancing device which, additionally to developing a force equal to and oppositely directed from the weight of the slide/head assembly, can also develop a moment having the same magnitude as, but being oppositely directed from, that induced on the spindle head being slid horizontally.

Based upon the above idea, the technical problem is solved by a balancing device as indicated, which comprises:

a second rope set a distance apart from the first-mentioned rope and having one end connected to said slide and the other end wound to a second electric hoist;

force transducers associated with each of the two ropes to measure the tension values of each;

a signal processor connected with its input to each transducer and being operative to produce on respective outputs an electric signal corresponding to the sum of said tension values, on the one side, and an electric signal corresponding to the difference of said values, on the other side;

said signals being applied to drive the pair of said electric hoists to keep the resultant of said tension values constantly through the center of gravity of the combination of said head, said slide, and said attachment where provided.

The features and advantages of the balancing device according to the invention will be apparent from the following detailed description of an embodiment thereof, given by way of example and not of limitation with reference to the accompanying drawings.

In the drawings:

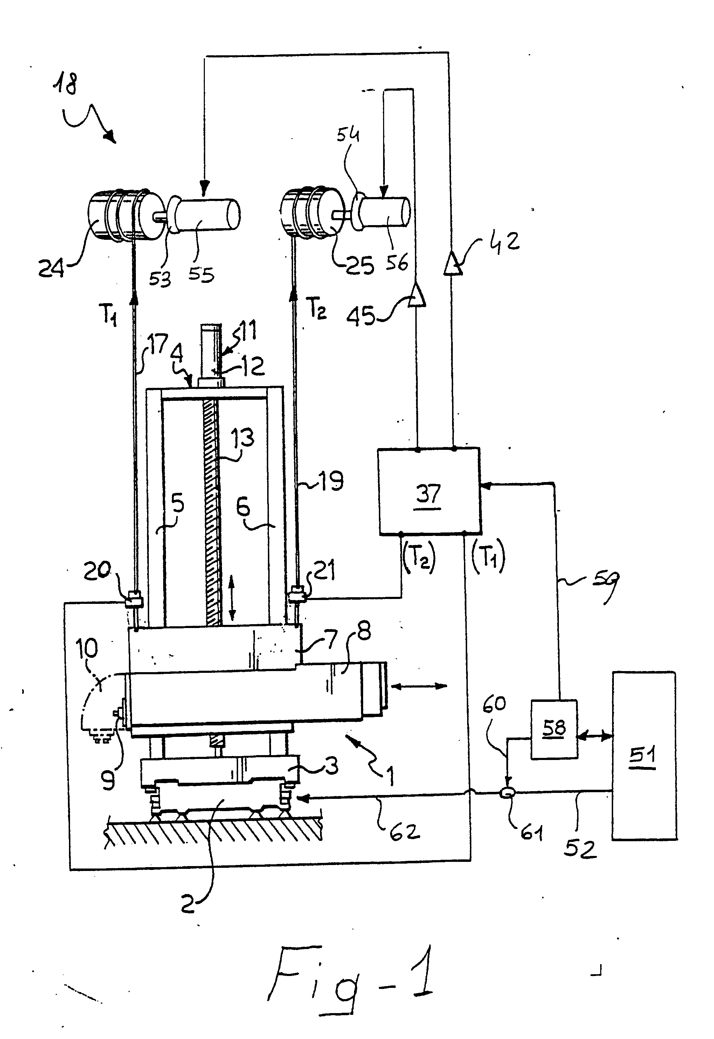

Figure 1 is a view showing schematically the balancing device of this invention; and

Figure 2 is a view showing schematically a modified embodiment of the device in Figure 1.

With reference to the drawing figures, generally indicated at 1 is a machine tool, in particular a large-size boring and milling machine.

The machine tool 1 comprises a machine bed 2 which extends in a horizontal direction and is secured on the floor in a manner known per se.

A carriage 3 is guided for sliding movement on the bed 2.

Also provided is an upright 4 of parallelepipedic shape which extends vertically upwards from the carriage 3 and has slideways 5 and 6 also laid vertically.

A slide 7 is guided for movement along such slideways 5 and 6 which carries a tool post 8 of the machine 1.

The tool post 8 is guided for movement in a horizontal direction and carries a spindle 9 rotatably thereon. The tool post 8 also mounts an attachment 10 equipping the machine 1, such as a right-angle milling cutter whose chuck is driven from the spindle 9.

The feeding motion of the slide 7 in the vertical direction is provided by a motive means, generally indicated at 11, in accordance with predetermined rate values and settings which are defined by an NC apparatus, indicated at 51. The motive means 11 comprises a DC electric motor, or alternatively an AC electric motor 12 which drives the slide 7 through a screw 13 and nut drive, the nut being omitted from the drawing.

The machine tool 1 is equipped with a balancing device, generally indicated at 18, for counterbalancing the combined weights of the slide 7 and tool post 8, including any attachment thereof, and the moment induced in operation by the tool post or spindle head 8.

The device 18 includes a pair of tensioning ropes formed by steel cables, and specifically a first rope 17 and a second rope 19 set at a distance apart.

These have respective ends connected to the slide 7 through corresponding force transducers 20, 21 of the load cell type.

The transducers 20 and 21 measure the values of forces T1 and T2 on the ropes 17 and 19 being wound around drums 24 and 25.

The drums 24 and 25 are each driven from a respective gear motor, known per se, which may be a so-called electric hoist, for example. The reference numerals 53 and 54 denote the reduction gears, while 55 and 56 denote the respective motors.

These motors, 55 and 56 may be of the DC-operated type, or in quite an equivalent manner, of the AC-operated type. In either case, they are adapted to be driven by an electronic driver 36 which can control their speeds and angular positions, e.g. in the same arrangement as is employed on machine tools for the feeding and setting motors.

The electronic driver device 36 comprises a signal processor 37, specifically a microprocessor, which incorporates data storage units loaded with balancing values for the weight force of the slide/head combination, and with compensation values for the induced moment as predetermined according to the positions of the head 8 on the slide 7 and of the attachment, if any.

The processor 37 has connected inputs and force transducers 20 and 21, and is operative to produce, on respective outputs 38 and 39, control signals to the electric motors 55 and 56 via respective amplifiers 42 and 45.

Also provided is an NC device 51 adapted to control, in an automatic manner, the speeds and settings along the axis of the machine 1 by operation conventional setting means, not shown, through electric signals issued on a line 52.

That line 52 is led to a summing node 61 which receives, from a different end, a line 60 connected to the output of a microprocessor 58 having a respective data storage unit. This microprocessor 58 is effective to store in, at successive times, the geometric position of the machine 1 by picking up data from a bi-directional connection to the device 51.

Depending on requirements, the microprocessor 58 will supply the operational components of the machine 1 with electric signals, through the node 61 and an electric line 62, which are effective to control the settings of such components.

In addition, the microprocessors 37 and 58 are interconnected by a uni-directional electric connection 59. The microprocessor 58 will output electric signals to the microprocessor 37 which are related to force compensation.

More specifically, the tension forces T1 and T2 for the ropes 17 and 19 should be adjusted to suit the following relations:

$$T1 + T2 = P + A$$
$$d * (T1 - T2) = (P + A) * a = (P + A) * f(W,A)$$

where,

d is the distance between the ropes,

P is the weight of head 8,

A is the weight of attachment 10, and

a is the amount of the displacement undergone by the combined center of gravity of the head 8, attachment 10, and slide 7 from a starting position which substantially corresponds with the midline of the points of connection of the ropes 17 and 19 to the slide 7.

The value of "a" is a function of the extent W the head 8 and attachment 10 are moved out.

Thus, the microprocessor 58 is adapted to emit, to the other microprocessor 37, electric signals relating to force compensation, in particular relating to attachment 10, where provided, as a function of the weight A of said attachment and the position of the center of gravity thereof.

Base on these signals, the microprocessor 37 will drive the motors 55 and 56, both as relates to speed and position, such that the tension forces T1 and T2 on the ropes 17 and 19 are kept at the target values as obtained from the above- noted relations, and that the resultant of such tension values will pass constantly through the combined center of gravity of the head 8, slide 7 and possible attachment 10.

The instant measurement of the values of T1 and T2 is ensured by the provision of the measuring cells 21 connected to the input side of the microprocessor 37.

Accordingly, the balancing device of this invention will provide ready control of the force to counterbalance the combined weights of the slide 7 and head 8, and its related attachment 10, and of the compensating moment in a commensurate manner with the extent of the off-center displacement undergone by the head from the combined center of gravity.

The response times of this device are uncommonly short even at high rates of movement of the tool post.

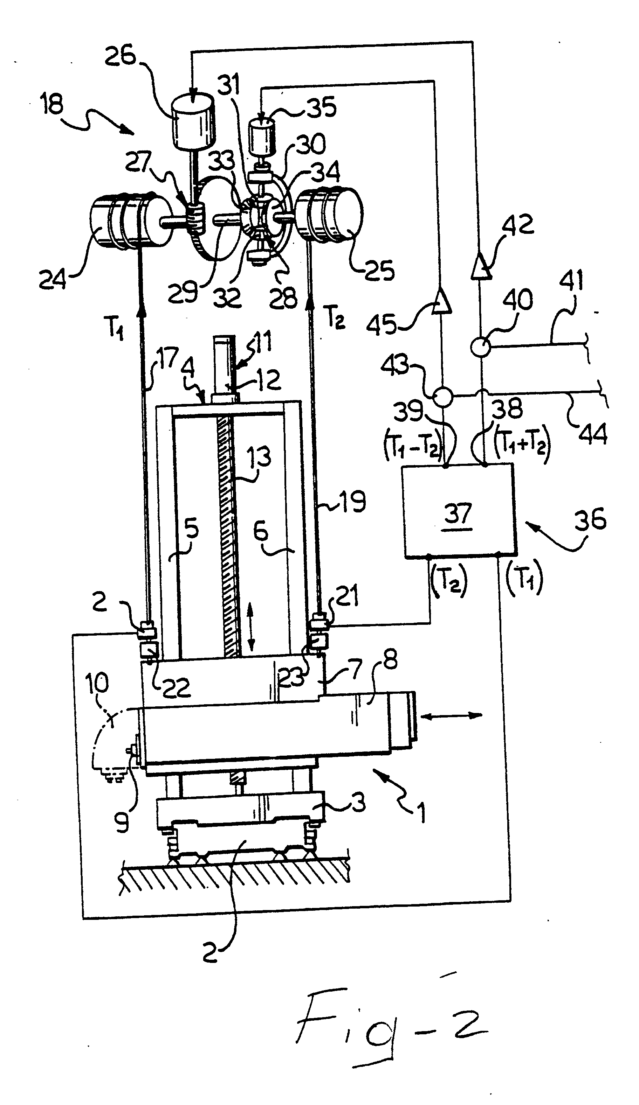

A modified embodiment of the balancing device according to the invention will be now described with particular reference to the example shown in Figure 2, wherein cooperating parts and items which are constructed and operate in the same manner as the preceding embodiment are denoted by the same references.

In this variation, an elastic member is provided in series with each force transducer 20 and 21; indicated at 22 and 23 being such elastic members as are respectively associated with the transducers 20 and 21 at the corresponding ends of the ropes 17 and 19.

Each transducer 20 and 21 is effective to measure at every instant of time the tension values T1 and T2 of the corresponding rope, 17 and 19.

The opposed ends of each of the ropes 17 and 19 are wound around first 24 and second 25 drums, respectively. The drums 24 and 25 have the same diameter dimensions, and winding direction of rope 19 on the drum 25 is the opposite from that of rope 17 on its corresponding drum 24.

The first drum 24 is driven directly by a DC electric motor 26 connected to the drum via a reduction gear 27.

Advantageously, the second drum 25 would be driven by the same motor 26, and related reduction gear 27, via a differential mechanism having planetary gears 33 and 34 keyed to a drive shaft 29 connected to the reduction gear 27.

The differential mechanism 28 includes a stator 30 which carries oppositely located planet gears 31 and 32. Also provided is a DC motor 35 which acts on the stator 30 to change the angular position of the latter, thereby causing the drums 24 and 25 to change their timing.

The balancing device 18 further comprises an electronic control device 35 incorporating a signal processor 37 associated with data storage units, not shown because conventional, wherein data is contained which relates to the counter-balance values for the weight force of the slide/head combination, along with compensation values for the induced moment as predetermined for the position of the head 8 on the slide 7 and of the attachment, where provided.

The processor 37 is input connected to both force transducers 20 and 21, and is operative to output, on respective outputs 38 and 39, a proportional electric signal to the sum of T1 plus T2, on the one hand, and a proportional electric signal to the difference (T1 - T2) of said tension values, on the other hand.

The output 38 is connected to a compare node 40 which is also supplied a reference signal over a line 41 which corresponds to the combined weight forces of the carriage 7 and head 8, with the possible attachment 10.

This reference signal will be set by an operator according to a balancing value to be imparted, or alternatively supplied automatically on the machine being started.

The output from the node 40 is applied, via an amplifier 42, to the electric motor 26 for driving the drum 24.

The output 39 of the processor 37 is connected, in turn, to a compare node 43 which also receives, via a line 44, a proportional signal to the pre-set moment compensation value.

The output from the node 43 is passed, via an amplifier 45, to control the motor 35 associated with the stator 30.

Desired balancing of the combined weigths of the slide and head, and of the attachment 10, is accomplished by means of the action of the DC electric motor 26 on the drums 24 and 25 which allow the ropes 17 and 19 to be tensioned, respectively.

Thus, the motor 26 is controlled regeneratively through a control loup which includes the transducers 20 and 21, processor 37 and compare node 40.

With the tension values of T1 and T2 of the ropes 17 and 19 measured continuously through the transducers 20 and 21, the processor 37 will produce on the output 38 a signal which is proportional to the sum (T1 + T2) of such tension values. This signal is compared in the node 40 to the predetermined value balancing out the weight force stored in the memories of the device 36, and the balance is passed through the amplifier 42 to drive the motor 26.

Likewise, on the output 39 a signal is produced which is proportional to the difference (T1 - T2) of the tension values and a comparison is carried out, through the node 43, with the predetermined compensation value for the induced moment expected during the advance movement of the head 8 in the horizontal direction.

The difference signal is passed, through the amplifier 45, to control the motor 35 which, with the stator 30 rotating, will allow the positions of the drums 24 and 25 to be offset angularly, thereby changing the tension values T1 and T2 on the respective ropes 17 and 19 to balance out the moment induced by the advance movement of the head 8 on the slide 7.

Also in this modified embodiment does the balancing device according to the invention afford ready control of the force to counterbalance the combined weights of the slide and head, and related attachment, as well as control of the compensation moment, while taking into account the extent of the eccentric displacement of the head from the combined center of gravity.

It will be appreciated, moreover, that a skilled person in the art may apply several modifications and changes to the balancing device described hereinabove without departing from the scope of this invention as set forth in the appended claims.

## Claims

1. A device for counter-balancing the weight and moment induced in operation by the head, and any attachment thereof, of a machine tool being guided for movement along a horizontal direction on a slide which is movable vertically along an upright, the device being of a type which includes a tensioning rope having one end connected to said slide and the other end connected to an electric hoist, characterized in that it comprises:
a second rope (19) set a distance apart from the first-mentioned rope (17) and having one end connected to said slide (7) and the other end wound to a second electric hoist (25,54,56);
force transducers (20,21) associated with each of the two ropes (17,19) to measure the tension values (T1,T2) of each;
a signal processor (37) connected with its input to each transducer (20,21) and being operative to produce on respective outputs an electric signal corresponding to the sum of said tension values (T1,T2), on the one side, and an electric signal corresponding to the difference of said values, on the other side;
said signals being applied to drive the pair of said electric hoists to keep the resultant of said tension values (T1,T2) constantly through the center of gravity of the combination of said head (8), said slide (7), and said attachment (10) where provided.

2. A device according to Claim 1, characterized in that it comprises an NC control device (51) active on machine (1) operational components, and a microprocessor (58) and related data storage unit connected bi-directionally to said NC control device (51) to control said tension values (T1,T2) according to the geometrical position taken by the machine.

3. A device according to Claim 1, characterized in that changes in the tension values (T1,T2) consequent to displacements (W) of the head (8) are sensed automatically on exchanging the possible attachment (10).

4. A device for counter-balancing the weight and moment induced in operation by the head, and any attachment thereof, of a machine tool being guided for movement along a horizontal direction on a slide which is movable vertically along an upright, the device being of a type which includes a tensioning rope having one end connected to said slide and the other end wound around a drum driven by an electric motor, characterized in that it comprises:
a second rope (19) set a distance apart from the first-mentioned rope (17) and having one end connected to said slide (7) and the other end wound around a second drum (25) driven by an electric motor (35);
force transducers (20,21) associated with each of the two ropes (17,19) to measure the tension values (T1,T2) of each;
a signal processor (37) connected with its input to each transducer (20,21) and being operative to produce on respective outputs (38,39) an electric signal corresponding to the sum of said tension values, on the one hand, and an electric signal corresponding to the difference of said values, on the other hand;
said signals being applied to drive said electric motors (26,35) such that the sum of the tension values equals the weight to be balanced and their difference equals an appropriate value to compensate for said induced moment.

5. A device according to Claim 4, characterized in that said second drum (25) is driven by the electric motor (26) associated with the first drum.

6. A device according to Claim 5, characterized in that said second drum (25) is driven by the electric motor (26) associated with the first drum through a drive shaft (29) incorporating a differential mechanism (28).

7. A device according to Claim 6, characterized in that it comprises a further DC electric motor (35) active on the stator (30) of said differential mechanism (28) to shift angularly the position of the second drum (25) relatively to the first (24).

Fig-1

Fig - 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-3423495 (TOSHIBA KABUSHIKI KAISHA)<br>* the whole document *<br>--- | 1-7 | G05B19/18<br>B23Q11/00 |
| A | DE-A-3341253 (INNSE INNOCENTI SANTEUSTACCHIO S.P.A.)<br>* the whole document *<br>--- | 1-7 | |
| A,D | DE-A-3422586 (INNSE INNOCENTI SANTEUSTACCHIO S.P.A.)<br>* the whole document *<br>--- | 1-7 | |
| A | FR-A-2156200 (HAUSER HENRI AG)<br>* the whole document *<br>--- | 1-7 | |
| A | DE-C-3336920 (WERKZEUGMASCHINENFABRIK ADOLF WALDRICH COBURG GMBH)<br>* the whole document *<br>----- | 1-7 | |
| | | | **TECHNICAL FIELDS SEARCHED (Int. Cl.5)**<br><br>G05B<br>B23Q |

The present search report has been drawn up for all claims

| Place of search | Date of completion of the search | Examiner |
|---|---|---|
| THE HAGUE | 21 JUNE 1990 | HAUSER L.E.R. |

EPO FORM 1503 03.82 (P0401)